# EUROPEAN PATENT APPLICATION

(11) **EP 0 603 839 A1**
(43) Date of publication of application: **29.06.1994**
(21) Application number: 93120639.5
(22) Date of filing: 21.12.1993
(51) Int. Cl.: B60R 16/02

(54) **Time-switching device of reduced dimensions, particularly for motor vehicles**

(30) Priority: 22.12.1992 IT TO920299 U
(71) Applicant: BITRON VIDEO S.r.l., I-10060 Cantalupa (TO) (IT)
(72) Inventor: Brucco, Massimo, I-10100 Torino (IT); Petrone, Alberto, I-10096 Collegno (TO) (IT)
(74) Representative: Dini, Roberto, Dr. Ing.

(57) **Abstract**

The innovation concerns a time-switching device, particularly for motor vehicles, comprising a relay and an electronic timing circuit.

The main characteristic of the device consists in the fact that the electronic timing device (15) is realised in a miniature form and that it is arranged on the same base (13) that supports the components of the relay (12).

## Description

The innovation concerns a time-switching device, particularly for motor vehicles, comprising a relay and an electronic timing circuit.

Devices of the type described above are known. They are employed for instance in motor vehicles for commanding devices, such as direction indicators, rear window defrosters, windscreen wiper timers, buzzers, etc.

They are generally obtained by assembling on a suitable circuit board the relay, the timing circuit, several electrical components (for instance three resistances and a capacitor) and a base having connection terminals.

Based on the fact that the overall dimensions of a device obtained in this way result in being much greater than that of a relay on its own, and that the less space occupied the more advantageous it be, the inevitable production tolerances of the various functional components (relay, timing circuit and auxiliary components) cause, even though having controlled the individual components, the overall device to result perhaps in being unacceptable.

Furthermore, the automatic assembly of the various components on the circuit board for obtaining the complete device does not result in being easily realisable and finally the necessity of having to manage numerous assembly operations, each of which being a potential cause of defects, reduces the reliability of the final complete device.

The aim of the present innovation is that of indicating a device of the kind mentioned, improved, so as to overcome the aforementioned drawbacks.

In view of reaching such aims, the innovation has as its subject a time-switching device, particularly for motor vehicles, comprising a relay and an electronic timing circuit, characterised in that the electronic timing circuit is realised in a miniature form and that it is assembled on the same circuit board that supports the components of the relay.

Further aims and advantages of the innovation shall result in being clear from the detailed description that follows executed in reference to the annexed drawings, supplied purely as an explanatory and non limiting example, wherein:
- figure 1 represents an exploded view of the device according to the innovation;
- figure 2 represents a plan view of the timing circuit being part of the device of figure 1 and the electric diagram of the same device;
- figure 3 represents a partially sectioned view of the device of figure 1;
- figure 4 represents a side view of the device of figure 1.

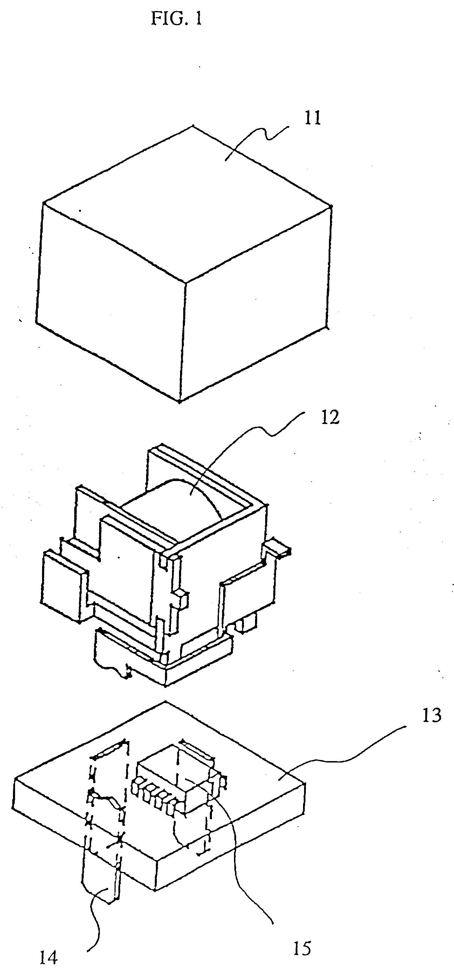

In figure 1 the reference number 11 indicates the cover of the device; reference number 12 indicates the relay; reference number 13 indicates the base of the relay with the connection terminals, of the FASTON type, one of which is indicated with reference number 14; reference number 15, finally, indicates the electronic timing circuit, housed in a substantially parallelepiped housing of a standard size.

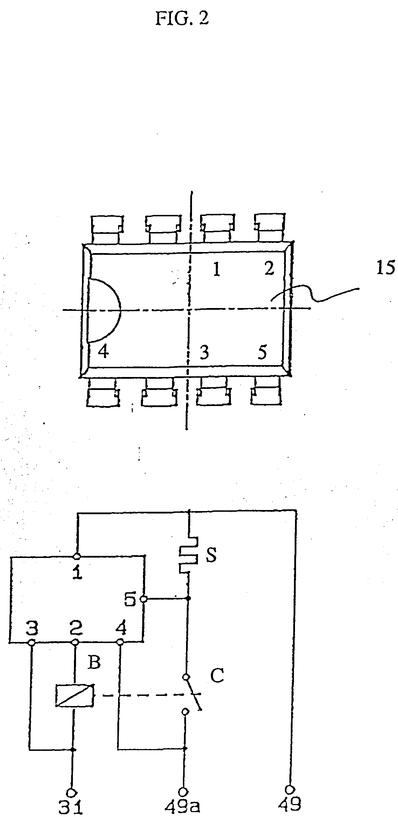

In figure 2, in the upper section, the timing circuit 15 is represented, seen from above; with reference numbers from 1 to 5 five terminal connections (pins) are indicated of the device; the timing circuit 15 can be for instance an integrated circuit of the U643B type by Telefunken.

In the same figure, in the lower section, the electric diagram of the device of figure 1 is represented; with the same numbers 1 to 5 the terminal connections of the timing circuit are indicated; with the reference letter B the coil of the relay is indicated; with reference letter C the switching device of the relay is indicated; with reference letter S a measuring resistor is indicated that informs the timing circuit whether the contact is closed or open.

The places provided on the base of the relay for the soldering of the pins of the timing circuit are positioned at a distance being equal to the standard provided for integrated circuits.

With reference numbers 31,49 and 49a the three connection terminals of the commutation device are indicated; the example relates to a direction indicator; terminal 31 is connected to the earth of the motor vehicle; terminal 49 to the supply battery and terminal 49a is connected to the direction indicator (right or left according to the status of the manual actionable switch of the dashboard).

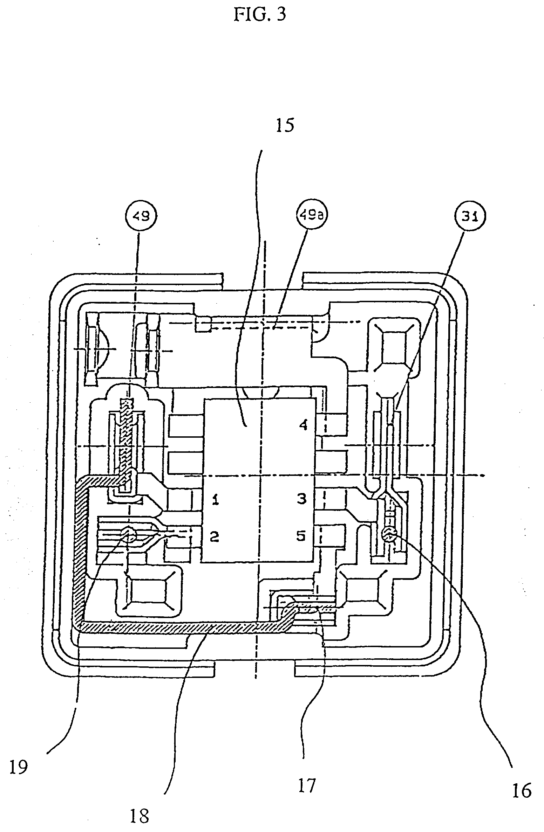

In figure 3 a plan view of the base of the device is represented; in which the relay is partially sectioned.

Reference numbers 31,49 and 49a indicate the respective connection terminals as previously mentioned; reference numbers 1 to 5 represent the pins of the timing circuit, also already mentioned; reference number 16 represents one of the terminals (sectioned) of the coil of the relay; reference number 17 indicates the terminal of the measuring resistor (S), reference number 18 indicates the measuring resistor S, realised in manganin, integrated within the relay; said resistor is sectioned; reference number 19 indicates another terminal (sectioned) of the coil of the relay.

The timing circuit 15 is assembled on the base before the mounting of the relay 12 and its terminals are soldered with silver paste or with electric spot welding or other similar system to appropriate placements on the base 13; on the housing of the timing circuit 15 the other necessary components (three resistances and a capacitor) are mounted, of the type SMD (Surface Mounted Device); finally over the ensemble the relay 12 is mounted (see figure 1).

In this way the overall dimensions of the entire device result in being substantially the same as a relay in itself, mounted on the base with FASTON terminals.

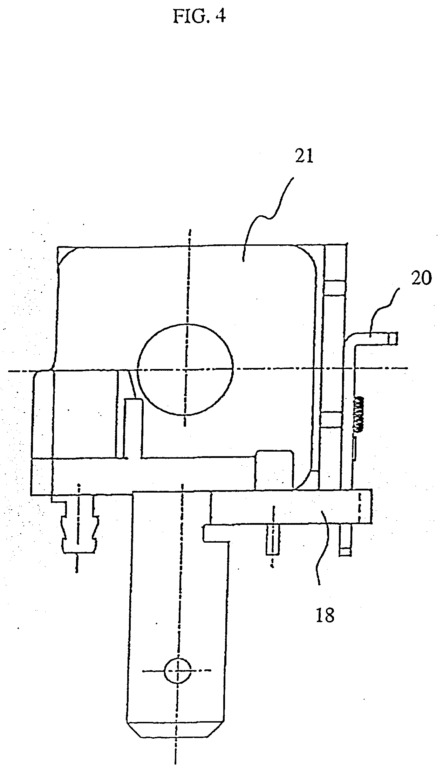

In figure 4 that represents a side view of the device according to the innovation; there are indicated:
- with reference number 18 the resistor S;
- with reference number 20 the hooking for the opposing spring of the relay;
- with reference number 21 a lateral flange of the coil of the relay.

From the given description the main advantages of the present innovation result in being clear.

In particular the reduced dimensions as already made evident; then the fact that the assembly of the device can be easily automated; the consequent reduction in costs; and finally the improved reliability of the device.

It is however clear that numerous variants are possible to the device subject of the present innovation, without departing from the inherent novelty principles. For instance the accessory components (SMD) may be contained in the same housing as the timing circuit, rather than be mounted above.

Another variant could consist in the mounting of the integrated circuit and the components with which it is housed under the base of the relay instead of above.

Another variant that is possible to introduce to the device subject of the invention, consists in realising an electronic timing circuit 15 without the container mounted on a support plate according to the known art "chip on board" so as to obtain a reduction in costs and a reduction in the dimensional bonds that an integrated circuit housed in a standard covering necessitates. Furthermore the electronic timing circuit 15 realised with the mentioned "chip on board" technique can, with appropriate circuitry expedients, be mounted on the relay itself rather than on the base 13 that supports the components of the relay.

A further variant may consist in the fact of welding the accessory components utilising as a support the pins of the integrated circuit.

Finally a last variant that is possible to introduce is that of mounting only the measuring resistor (S) on the same base that supports the components of the relay.

## Claims

1. Time-switching device, particularly for motor vehicles, comprising a relay and an electronic timing circuit, characterised in that the electronic timing circuit (15) is realised in a miniature form and that it is assembled on the same terminal board (13) that supports the components of the relay (12).

2. Time-switching device, according to claim 1, characterised in that said timing circuit (15) is arranged under said relay (12).

3. Time-switching device, according to claim 1, characterised in that above said timing circuit (15) other electric components (SMD) of the device are arranged.

4. Time-switching device, according to claim 1, characterised in that within the housing of said timing circuit (15) other electrical components (SMD) of the device are arranged.

5. Time-switching device, according to claim 1, characterised in that the electrical components utilise the pins of said timing circuit (15) as a supportive base for the welding.

6. Time-switching device, according to claim 1, characterised in that in said relay (12) a measuring resistor (S) is integrated.

7. Time-switching device, according to claim 1, characterised in that said timing circuit (15), realised in a miniature form, is housed in a container.

8. Time-switching device, according to claim 1, characterised in that said timing circuit (15) is constituted by an integrated circuit (U643B).

9. Time-switching device, according to claim 1, characterised in that the distance between the places provided in the relay and the pins of the timing circuit (15) is the standard provided for integrated circuits.

10. Time-switching device, according to claims 1 and 8, characterised in that said timing circuit (15) is realised without a container.

11. Time-switching device, particularly for motor vehicles, comprises a relay and an electronic timing circuit, characterised in that a measuring resistor (S) is further provided arranged on the same base (13) that supports the components of the relay.

12. Time-switching device, particularly for motor vehicles, comprises a relay and an electronic timing circuit, characterised in that the electronic timing circuit (15) is realised in a miniaturised form and that it is arranged on the relay (12).
